# EUROPÄISCHE PATENTSCHRIFT

(11) **EP 1 101 845 B1**
(45) Veröffentlichungstag und Bekanntmachung des Hinweises auf die Patenterteilung: **21.06.2006**
(21) Anmeldenummer: 00119719.3
(22) Anmeldetag: 09.09.2000
(51) Int. Cl.: D01H 4/12

(54) **Lageranordnung für einen Rotorschaft in einer Offenend-Spinnvorrichtung**
Bearing assembly for a spinnrotor in an open-end spinning machine
Palier pour un rotor de filage dans une machine de filature à bout ouvert

(30) Priorität: 20.11.1999 DE 19955829
(43) Veröffentlichungstag der Anmeldung: 23.05.2001
(73) Patentinhaber: Saurer GmbH & Co. KG, 41069 Mönchengladbach (DE)
(72) Erfinder: Wassenhoven, Heinz-Georg, 41065 Mönchengladbach (DE); Landolt, Claus-Dieter, 41179 Mönchengladbach (DE)
(74) Vertreter: Hamann, Arndt

(56) Entgegenhaltungen:
- DE-A- 19 729 191
- US-A- 5 399 028
- US-A- 5 927 869
- US-A- 5 959 383

## Beschreibung

Die Erfindung betrifft eine Offenend-Spinnvorrichtung mit den Merkmalen des Oberbegriffes des Anspruches 1.

Im Zusammenhang mit Offenend-Rotorspinnmaschinen sind Spinnaggregate bekannt, bei denen der mit hoher Drehzahl umlaufende Spinnrotor mit seinem Rotorschaft im Lagerspalt einer Stützscheibenlageranordnung abgestützt und über ein endseitig angeordnetes Axiallager fixiert ist.
Die Achsen der beiden Stützscheibenpaare sind dabei derart geschränkt, daß auf den Rotorschaft ein Axialschub ausgeübt wird, der den Rotorschaft in Anlage an dem endseitig angeordneten mechanischen Axiallager hält.

Diese Art der Lagerung von Offenend-Spinnrotoren, die beispielsweise in der DE-OS 25 14 734 beschrieben ist, hat sich in der Praxis bewährt und ermöglicht Rotordrehzahlen von 100.000 Umdrehungen pro Minute.

Nachteilig bei dieser Art der Spinnrotorlagerung ist allerdings, daß aufgrund der Schränkung der Stützscheiben zwischen den Laufflächen der Stützscheiben und dem Rotorschaft erhöhte Reibung auftritt, die mit der Zeit zu einer Erwärmung der Laufflächen der Stützscheiben führt. Durch diese Reibungswärme werden nicht nur die Laufflächen der Stützscheiben erheblich beansprucht, sondern zur Überwindung dieser Reibung ist auch zusätzliche Energie notwendig. Die bekannten mechanischen Axiallager sind des weiteren, auch bei vorschriftsmäßiger Schmierung, einem nicht unerheblichen Verschleiß unterworfen.

Es sind daher in der Vergangenheit bereits Versuche unternommen worden, diese mechanischen Axiallager durch verschleißfreie Magnetlager zu ersetzen.

In der DE 195 42 079 A1 ist eine axiale Magnetlageranordnung beschrieben, bei der ein Magnetlagerelement stationär im Gehäuse eines Axiallagers festgelegt und das andere Magnetlagerelement lösbar am Rotorschaft des Spinnrotors angeordnet ist. Bezüglich der Anbindung der mit dem Spinnrotor umlaufenden Magnetlagerelemenete am Rotorschaft werden dabei verschiedene Varianten vorgeschlagen.

Einige dieser Varianten betreffen eine kraftschlüssige, andere eine formschlüssige Befestigung der mitrotierenden, im Bedarfsfall leicht lösbaren Magnetlagerelemente.
Mit diesen bekannten Magnetlagereinrichtungen ist zwar eine korrekte axiale Fixierung des Rotorschaftes auf der Stützscheibenlageranordnung möglich und es ist außerdem sichergestellt, daß der spinnrotor bei Bedarf problemlos ein- und ausgebaut werden kann, es hat sich allerdings gezeigt, daß die vom Prinzip her vorteilhafte, im Bedarfsfall leicht lösbare, kraftschlüssige Befestigung der Magnetlagerkomponente am Rotorschaft noch verbesserungsfähig ist.
Problematisch bei derartigen Magnetlagereinrichtungen ist insbesondere die Befestigung der mitrotierenden Magnetlagerelemente am Rotorschaft, da aufgrund der hohen Drehzahl des Spinnrotors an die Auswuchtgüte dieser Verbindung hohe Anforderungen gestellt werden.

Eine Offenend-Rotorspinneinrichtung mit einem permanentmagnetischen Axiallager ist auch durch die AT-PS 270 459 bekannt.

Bei dieser bekannten Lageranordnung sind am Schaftende des Rotorschaftes eines Spinnrotors ferromagnetische Ringansätze angeordnet, denen Polschuhe eines in diesem Bereich schwenkbar gelagerten Permanentmagnets gegenüberstehen. Die durch eine solche Anordnung erzielbare Bündelung der magnetischen Kraftlinien des Permanentmagnets führte zu einer relativ steifen Fixierung des Rotorschaftes im Lagerzwickel einer Stützscheibenlagerung.

Nachteilig bei einer derartig gestalteten Magnetlageranordnung ist allerdings, daß die am Rotorschaft angeordneten Ringansätze einen deutlich größeren Durchmesser aufweisen als der Rotorschaft selbst. Da die im Durchmesser deutlich größeren Ringansätze den Ein- und Ausbau des Spinnrotors, insbesondere dessen frontseitige Montage, erheblich erschweren bzw. verhindert, konnte sich diese bekannte Magnetlageranordnung in der Praxis nicht durchsetzen.

Des weiteren ist durch die DE 30 47 606 A1 eine Lagerung für eine mit relativ hoher Drehzahl umlaufende Spindel einer Textilmaschine bekannt.
Die Spindel ist dabei in radialer Richtung über eine stützscheibenlagerähnliche Dreipunktlageranordnung abgestützt und wird in axialer Richtung durch ein Magnetlager gesichert. Die Spindel weist endseitig einen im Durchmesser abgesetzten Lagerbereich mit zwei ferromagnetischen Ringansätzen auf.
Am Lagergehäuse ist eine aus einem nichtmagnetischen Material gefertigte Muffe festgelegt, in die ein ringförmiges Permanentmagnetelement, das von seitlichen Polscheiben eingeschlossen wird, eingelassen ist. Im eingebauten Zustand der Spindel stehen die ferromagnetischen Ringansätze des Spindelschaftes den Polscheiben des im statischen Lagerelement festgelegten Permanentmagnetelementes gegenüber.

Wenngleich diese bekannte Ausführungsform einen relativ problemlosen Ein- und Ausbau der Spindel in axialer Richtung ermöglicht, fand die Einrichtung aufgrund ihrer mangelnden axialen Lagersteifigkeit keinen Einzug in die Praxis.

Durch die DE 197 29 191 A1 oder die nachveröffentlichte DE 199 10 279.1 sind des weiteren Lagerungen für Spinnrotoren bekannt, bei denen der Rotor mit seinem Rotorschaft axialschubfrei im Lagerzwickel einer Stützscheibenlagerung abgestützt und durch ein magnetisches Axiallager axial fixiert ist.
Das Axiallager verfügt dabei über eine stationäre, am Lagergehäuse festlegbare Magnetlagerkomponente und eine rotierbar angeordnete Magnetlagerkomponente, die durch ferromagnetische Ringansätze im Bereich des Rotorschaftendes gebildet wird.
Die Ringansätze werden dabei durch Einstiche in den Rotorschaft gebildet, die anschließend mit einem nichtmagnetischen Füllmaterial ausgegossen werden. Auf diese Weise soll vermieden werden, daß beim Ein- oder Ausbau des Spinnrotors durch die scharfkantigen Ringansätze die Laufbeläge der Stützscheiben beschädigt werden können.

Bei der Ausführungsform gemäß DE 197 29 191 A1 ist als Füllmaterial Kunststoff vorgesehen, was jedoch nicht restlos überzeugen konnte, da der Kunststoff, bedingt durch die hohe Rotationsgeschwindigkeit des Spinnrotors, nach längerer Betriebsdauer zum "Fließen" neigt, was zu einer nicht hinnehmbaren Unwucht des Spinnrotors führt.

Diese Schwierigkeiten konnten durch Ausfüllen der Einstiche mit einem nichtmagnetischen metallischen Werkstoff, wie es in der DE 199 10 279.1 beschrieben ist, zwar vermieden werden, jedoch führte das Ausfüllen dieser Einstiche, zum Beispiel mit Kupfer, zu einer Materialanhäufung außerhalb des Lagerbereiches des Rotorschaftes, was sich negativ auf das Eigenschwingungsverhalten des Spinnrotors, insbesondere bei Drehzahlen deutlich über 100.000 min⁻¹ auswirkte.

Es ist deshalb Aufgabe der Erfindung, die bekannten Offenend-Spinnvorrichtungen weiter zu verbessern.

Diese Aufgabe wird erfindungsgemäß durch die kennzeichnenden Merkmale des Anspruches 1 gelöst.

Vorteilhafte Ausgestaltungen der Erfindung sind Gegenstand der Unteransprüche.

Die erfindungsgemäße Ausbildung des Rotorschaftes, insbesondere des Bereiches der rotierbaren Magnetlagerkomponente, hat einerseits den Vorteil, daß der Gewichtsanteil des Rotorschaftes, der die Lagerstellen überragt, minimiert werden kann und anderseits gleichzeitig gewährleistet bleibt, daß die relativ empfindlichen Laufflächen der Stützscheiben beim Ein-und Ausbau des Spinnrotors nicht beschädigt werden.

Das heißt, insbesondere in Verbindung mit einer Durchmesser- und Längendimensionierung des Rotorschaftes, wie sie in Anspruch 2 beschrieben ist, ist es gelungen, den Spinnrotor so weit zu optimieren, daß er selbst bei Drehzahlen > 130.000 min⁻¹ außerhalb seiner kritischen Eigenfrequenz bleibt.

Wie im Anspruch 3 dargelegt, weist der Rotorschaft dabei vorteilhafterweise eine Länge < 100 mm, vorzugsweise eine Länge von 93,5 mm auf. Diese gegenüber bisherigen Rotorschäften deutliche Verkürzung, die im wesentlichen den Bereich der Magnetlagerkomponente des Rotorschaftes betrifft, führt dazu, daß die kritische Eigenfrequenz des Spinnrotors auf ein Drehzahlniveau angehoben wird, das auch noch für weitere Entwicklungen Spielraum bietet.
Das heißt, die kritische Eigenfrequenz des erfindungsgemäßen Spinnrotors liegt bei einer Drehzahl, die deutlich über den Rotordrehzahlen liegt, die in absehbarer Zeit zu erwarten sind.

Zur Schonung der empfindlichen Laufflächen der Stützscheiben ist vorgesehen, daß die Ringansätze im Bereich ihrer Außenkanten durch Radien (Anspr.4) oder Fasen (Anspr.5) entschärft sind. Eine solche Ausbildung stellt einerseits auf einfache Weise sicher, daß die Laufflächen der Stützscheiben beim Ein- und Ausbau des Spinnrotors nicht beschädigt werden, andererseits führen die relativ kleinen Radien bzw. Fasen zu keiner nennenswerten Beeinträchtigung des Magnetflußes des Axiallagers. Die an den Ringansätzen angeordneten Radien sind beispielsweise zwischen 0,1 und 0,5 mm, vorzugsweise 0,3 mm groß.

Um die Bruchgefahr des mit hoher Drehzahl rotierenden Rotorschaftes zu minimieren, insbesondere um möglichst jede Kerbwirkung im Bereich der Ringansätze und Einstiche auszuschließen, sind auch im Bereich der Übergänge zwischen den Grundflächen der Einstiche und den benachbarten Seitenflächen der Ringansätze Radien vorgesehen. Diese Radien weisen jeweils eine Größe zwischen 0,2 und 1,5 mm, vorzugsweise 0,7 mm auf.

Wie in den Ansprüchen 9 - 12 weiter dargestellt, ist innerhalb des magnetischen Axiallagers zusätzlich ein mechanisches Notlauflager angeordnet.
Dieses Notlauflager besteht zumindest teilweise aus einem hochverschleißfesten Keramikwerkstoff, beispielsweise aus einem Keramikstift, der in eine Bohrung der Lagerbuchse des Axiallagers eingelassen ist. Der Keramikstift korrespondiert dabei mit einer beabstandet angeordneten Anlagefläche, zum Beispiel der Stirnfläche des Rotorschaftes.

Das heißt, der stationäre Keramikstift liegt während des "normalen" Spinnbetriebes nicht an seinem umlaufenden Widerlagerteil an. Es tritt daher keine zusätzliche Reibung auf.
Im Störfall verhindert das Notlauflager aber, daß die magnetischen Lagerkomponenten in direkten körperlichen Kontakt geraten können, was zu erheblichen Schäden am Axiallager führen würde.

Weitere Einzelheiten der Erfindung sind einem nachfolgend anhand der Zeichnungen dargestellten Ausführungsbeispiel entnehmbar.

Es zeigt:
- Fig. 1: eine Offenend-Spinnvorrichtung mit einem Spinnrotor, der mit seinem Rotorschaft axialschubfrei im Lagerzwickel einer Stützscheibenlagerung abgestützt und über ein endseitiges magnetisches Axiallager fixiert ist,
- Fig. 2: ein im Schnitt dargestelltes permanentmagnetisches Axiallager, mit dem Endbereich eines Rotorschaftes, der über eine erfindungsgemäß ausgebildete Magnetlagerkomponente verfügt,
- Fig. 3: eine Gesamtansicht eines erfindungsgemäßen Rotorschaftes,
- Fig. 4: die Magnetlagerkomponente gemäß Fig.2 in vergrößertem Maßstab und
- Fig. 5: eine alternative Ausführungsform einer Magnetlagerkomponente.

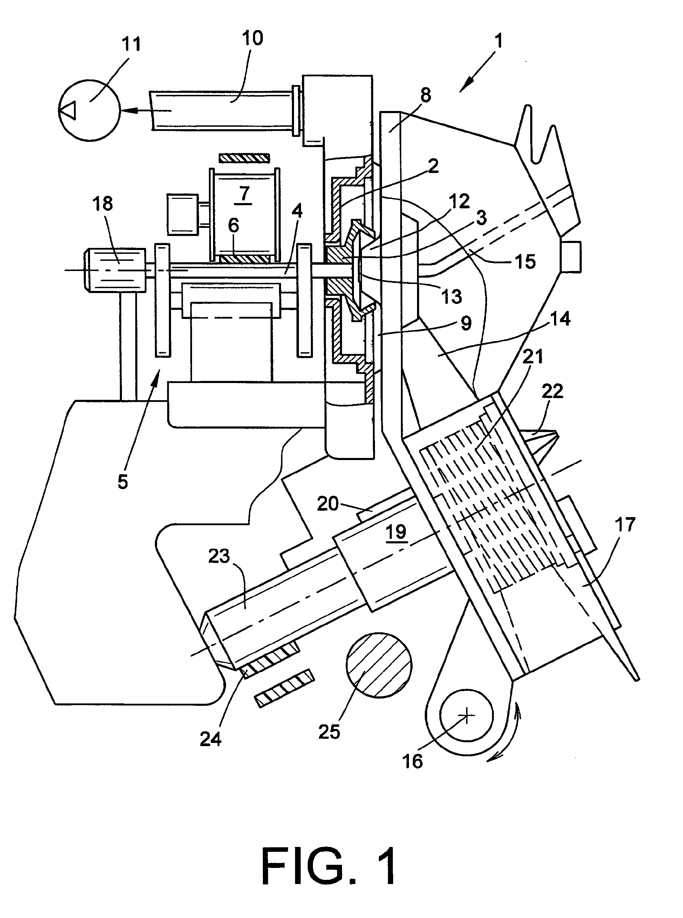

Das in Figur 1 dargestellte Offenend-Spinnaggregat trägt insgesamt die Bezugszahl 1.

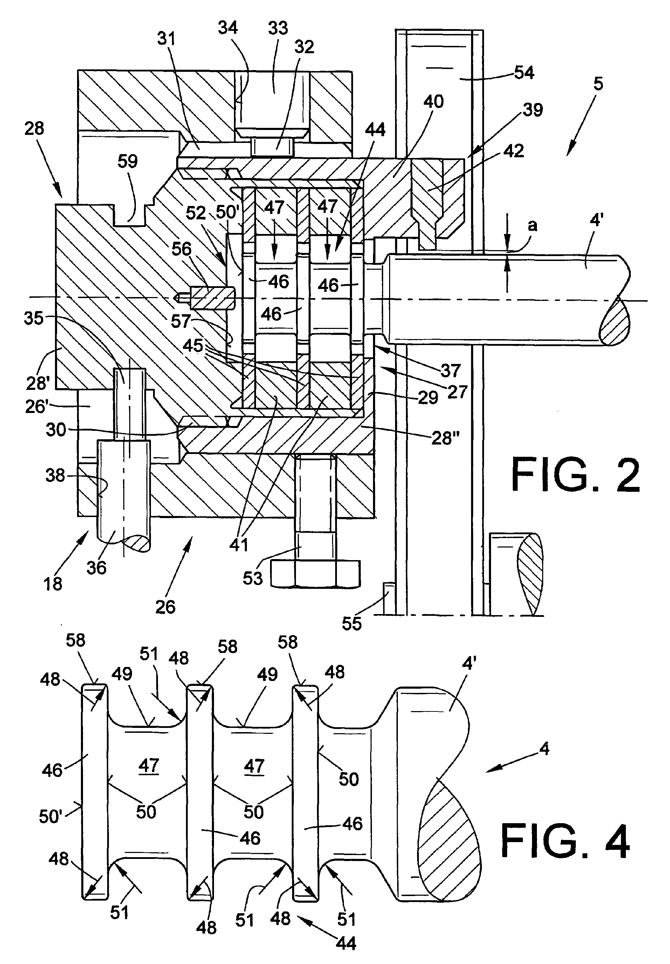

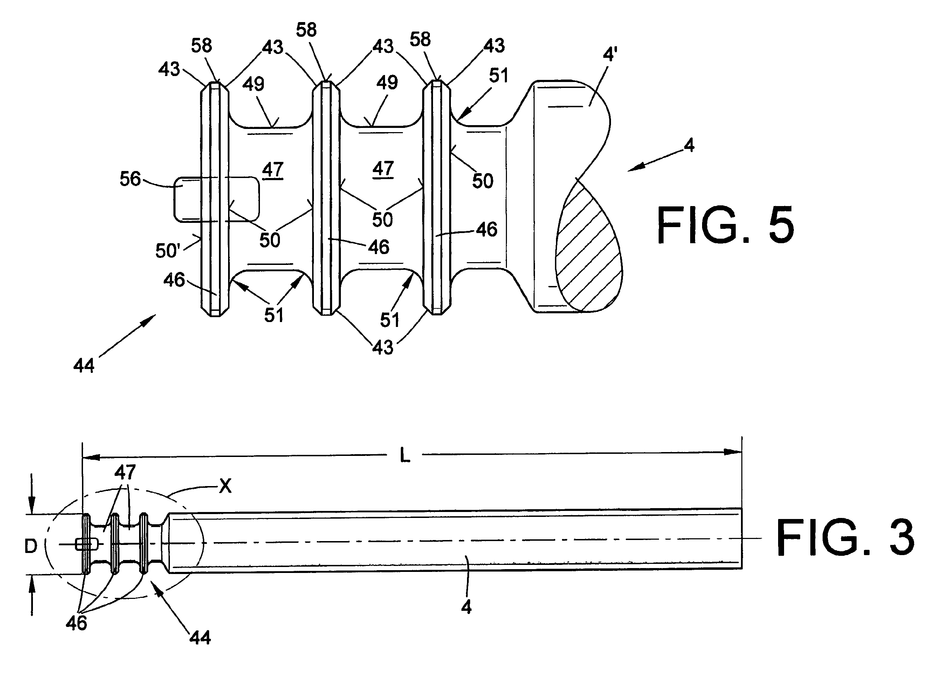

Das Spinnaggregat verfügt dabei, wie bekannt, über ein Rotorgehäuse 2, in dem die Spinntasse eines Spinnrotors 3 mit hoher Drehzahl umläuft. Der Spinnrotor 3 ist dabei mit seinem Rotorschaft 4 im Lagerzwickel einer Stützscheibenlagerung 5 abgestützt und wird durch einen maschinenlangen Tangentialriemen 6, der durch eine Andrückrolle 7 angestellt wird, beaufschlagt. Die axiale Fixierung des Rotorschaftes 4 erfolgt über ein permanentmagnetisches Axiallager 18, das in den Figuren 2 und 3 im Detail dargestellt ist.

Wie üblich, ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen.

Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

Im Deckelelement 8 ist ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an.
Außerdem ist am Deckelelement 8, das um eine Schwenkachse 16 begrenzt drehbar gelagert ist, ein Auflösewalzengehäuse 17 festgelegt. Das Deckelelement 8 weist des weiteren rückseitig Lagerkonsolen 19, 20 zur Lagerung einer Auflösewalze 21 beziehungsweise eines Faserbandeinzugszylinders 22 auf.
Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

Figur 2 zeigt das erfindungsgemäße Axiallager im Detail, wobei das Axiallager 18 im Schnitt dargestellt ist. Vom Stützscheibenlager 5 ist in Figur 2 lediglich eine Stützscheibe 54 mit ihrer Welle 55 angedeutet. Ein entsprechendes Stützscheibenpaar ist beabstandet in der Nähe der Spinntasse des Spinnrotors 3 angeordnet, wie das der Figur 1 zu entnehmen ist.

Das magnetische Axiallager 18 besteht aus einer im wesentlichen stationären Magnetlagerkomponente 27, die in einem Lagerhäuse 26 axial justierbar gehalten ist. Die aktiven Lagerbestandteile in Form von Permanentmagnetringen 41 mit jeweils beidseitig angeordneten Polringen 45 sind innerhalb einer zweiteiligen Lagerbuchse 28, bestehend aus einer Innenbuchse 28' und einer Außenbuchse 28'' angeordnet. Die Lagerbuchsenteile 28' und 28'' sind dabei über ein Gewinde 30 verschraubt. Die aktiven Lagerbestandteile 41 und 45, die innerhalb der Innenbuchse 28' geführt sind, werden gegen einen an der Außenbuchse 28" angeordneten Ringansatz 29 gepreßt. Dadurch ergibt sich einerseits eine stabile Lagerkonstruktion, andererseits eine unproblematische Demontierbarkeit des Lagers, um beispielsweise innerhalb des Lagers angeordnete Einzelteile auszutauschen.

Die Lagerbuchse 28 ist innerhalb einer Bohrung 26' des Lagergehäuses 26 axial verschiebbar gelagert. Dadurch kann die stationäre Magnetlagerkomponente 27 axial exakt so justiert werden, daß sich die spinntechnologisch optimale Lage der Rotortasse ergibt.

Um ein Verdrehen der Lagerbuchse 28 innerhalb des Lagergehäuses 26 zu vermeiden, greift ein Stift 32 eines in eine Bohrung 34 eingesetzten Bolzens 33 in eine Längsnut 31 der Lagerbuchse 28. Mittels eines in eine Nut 59 der Lagerbuchse 28 eingreifenden Zapfens 35 einer sogenannten Einstellehre 36 kann auf einfache Weise die axiale Justage der statischen Lagerkomponente 27 erfolgen. Die Einstellehre 36 wird dazu in eine Bohrung 38 des Lagergehäuses 26 eingesetzt.
Mittels einer Feststellschraube 53, die die Lagerbuchse 28 gegen das Lagergehäuse 26 verspannt, kann die axiale Lage der statischen Lagerkomponente 27 fixiert werden.

Der Rotorschaft 4 kann durch eine Öffnung im Rotorgehäuse 2, durch die Lagerzwickel der Stützscheibenlagerung 5 sowie eine Bohrung 37 des Ringansatzes 29 mit seiner rotierbaren Magnetlagerkomponente 44 in die stationäre Magnetlagerkomponente 27 eingeführt werden, während der übrige, hauptsächlich der Radiallagerung des Spinnrotors 3 dienende Schaftteil 4' außerhalb des Axiallagers 18 verbleibt.

Die Magnetlagerkomponente 44 des Rotorschaftes 4 besteht im wesentlichen aus Einstichen 47, die zwischen sich stegartige Ringansätze 46 bilden.
Der Rotorschaft 4 ist aus Stahl mit ferromagnetischen Eigenschaften gefertigt. Die Ringansätze 46 fluchten bei vollständig in das Axiallager 18 eingeführtem Rotorschaft 4 mit den beiderseits der Permanentmagnetringe 41 angeordneten Polscheiben 45. Die Polscheiben 45 weisen vorzugsweise die gleiche Breite wie die Ringansätze 46 auf. Vorteilhafterweise beträgt dabei die Breite der Ringansätze 46 jeweils etwa 1 mm, die Breite der Einstiche 47 jeweils etwa 3 mm.

Des weiteren ist im Bereich des Axiallagers 18 eine Abstützeinrichtung 39 angeordnet, die beispielsweise einen Keramikstift 42 aufweist, der in einer Bohrung des Ansatzes 40, der Lagerbuchse 28, vorzugsweise in die Außenbuchse 28'', eingelassen ist.
Wie in Fig.2 angedeutet, weist der Keramikstift 42 während des "normalen" Spinnbetriebes bezüglich des mit hoher Drehzahl umlaufenden Rotorschaftes 4 eine Abstand a auf, der sicher stellt, das zwischen den beiden Bauteilen keine Reibung auftritt.

Die Abstützeinrichtung 39 verhindert, daß es bei Spinnunterbrechungen, insbesondere während der Rotorreinigung, bei der die Andruckrolle 7 mit dem Tangentialriemen 6 vom Rotorschaft 4 abgehoben und der Spinnrotor 3 durch ein an einem Anspinnwagen angeordnetes Reinigungselement beaufschlagt wird, aufgrund der dabei auf den Rotorschaft 4 wirkenden radiale Kraftkomponente zu einem Verschwenken des Rotorschaftes 4 im Uhrzeigersinn und als Folge zu einem Kontakt der Magnetlagerkomponenten des Axiallagers 18 kommen kann.

Wie aus Fig.2 weiter ersichtlich, ist innerhalb des magnetischen Axiallagers 18 zusätzlich ein mechanisches Notlauflager 52 angeordnet.

Dieses Notlauflager 52 besteht beispielsweise, wie in Fig.2 angedeutet, aus einem Keramikstift 56, der in einer Bohrung der Lagerbuchse 28 festgelegt ist und im Notfall mit der Stirnfläche 50' des Rotorschaftes 4 korrespondiert.
Alternativ kann der Keramikstift 56 auch, wie in Fig.5 angedeutet, in einer Bohrung des Rotorschaftes 4 befestigt werden und korrespondiert dann mit der Bodenfläche 57 der Lagerbuchse 28.

Die Fig.3 zeigt einen Rotorschaft 4 in einer Gesamtansicht. Der Rotorschaft 4 ist dabei endseitig mit der erfindungsgemäßen Magnetlagerkomponete 44 ausgestattet.
Der Durchmesser D des Rotorschaftes 4 beträgt dabei zwischen 8 und 9 mm, vorzugsweise 8,25 mm. Die Länge L des Rotorschaftes 4 liegt unter 100 mm, vorzugsweise beträgt sie 93,5 mm.

Wie an sich bekannt, besteht die Magnetlagerkomponente 44, die in Fig.4 in einem größeren Maßstab dargestellt ist, aus Ringansätzen 46 sowie dazwischen liegenden Einstichen 47.
Der Außendurchmesser der Ringansätze 46 entspricht dabei vorzugsweise etwa dem Außendurchmesser D des Rotorschaftes 4, während der Durchmesser der Einstiche 47 deutlich darunter liegt und beispielsweise etwa 5 mm beträgt.

Erfindungungsgemäß sind die Ringansätze 46 im Bereich ihres Außenumfanges dadurch entschärft, daß sie beidseitig entweder, wie in Fig.4 dargestellt, einen Radius 48 oder, wie in Fig.5 angedeutet, eine Fase 43 aufweisen.
Wie insbesondere aus den Figuren 4 und 5 ersichtlich, sind auch die Übergänge zwischen den Grundflächen 49 der Einstiche 47 und den Seitenflächen 50 der Ringansätze 46 gerundet. Diese mit 51 gekennzeichneten Radien sind vorzugsweise etwas größere als die Radien 48 im Bereich des Außenumfangs der Ringansätze 46.

## Patentansprüche

1. Offenend-Spinnvorrichtung mit einem Spinnrotor (3), der mit seinem Rotorschaft (4) axialschubfrei im Lagerzwickel einer Stützscheibenlagerung (5) abgestützt und durch ein magnetisches Axiallager (18) fixiert ist, wobei das Axiallager (18) eine stationäre, am Lagergehäuse (26) festlegbare Magnetlagerkomponente (27) und eine umlaufende, rotorschaftendseitig angeordnete, durch wenigstens zwei ferromagnetische Ringansätze (46) gebildete Magnetlagerkomponente (27) aufweist und die Ringansätze (46) durch Einstiche (47) im Rotorschaft (4) gebildet werden,
**dadurch gekennzeichnet,**
**daß** die Ringansätze (46) jeweils im Bereich zwischen ihrem Außenumfang (58) und ihren angrenzenden Seitenflächen (50) entschärft sind und
**daß** die Grundflächen (49) der Einstiche (47) jeweils über Radien (51) mit den Seitenflächen (50) der benachbarten Ringansätze (46) verbunden sind.

2. Offenend-Spinnvorrichtung nach Anspruch 1, **dadurch gekennzeichnet, daß** das Verhältnis von Rotorschaftlänge (L) zum Rotorschaftdurchmesser (D) < 12 / 1, vorzugsweise 11,33 / 1 ist.

3. Offenend-Spinnvorrichtung nach Anspruch 1, **dadurch gekennzeichnet, daß** der Rotorschaft (4) eine Länge (L) < 100 mm, vorzugsweise eine Länge von 93,5 mm aufweist.

4. Offenend-Spinnvorrichtung nach einem der vorherigen Ansprüche, **dadurch gekennzeichnet, daß** die Ringansätze (46) im Bereich zwischen ihrem Außenumfang (58) und den angrenzenden Seitenflächen (50) jeweils einen Radius (48) aufweisen.

5. Offenend-Spinnvorrichtung nach Anspruch 4, **dadurch gekennzeichnet, daß** die Radien (48) im Bereich des Außenumfanges (58) jeweils zwischen 0,1 und 0,5 mm, vorzugsweise 0,3 mm betragen.

6. Offenend-Spinnvorrichtung nach einem der vorherigen Ansprüche, **dadurch gekennzeichnet, daß** die Ringansätze (46) im Bereich zwischen ihrem Außenumfang (58) und den angrenzenden Seitenflächen (50) jeweils eine Fase (43) aufweisen.

7. Offenend-Spinnvorrichtung nach einem der vorherigen Ansprüche, **dadurch gekennzeichnet, daß** die Radien (51) zwischen den Grundflächen (49) der Einstiche (47) und den Seitenflächen (50) der Ringansätze (46) zwischen 0,2 und 1,5 mm, vorzugsweise 0,7 mm groß sind.

8. Offenend-Spinnvorrichtung nach einem der vorherigen Ansprüche, **dadurch gekennzeichnet, daß** die Stirnseite (50') des letzten Ringansatzes (46) das hintere Ende des Rotorschaftes (4) darstellt.

9. Offenend-Spinnvorrichtung nach einem der vorherigen Ansprüche, **dadurch gekennzeichnet, daß** im Bereich des Rotorschaftendes ein mechanisches Notlauflager (52) vorgesehen ist, wobei wenigstens eine Lagerkomponente diese Notlauflagers aus einem keramischen Werkstoff gefertigt ist.

10. Offenend-Spinnvorrichtung nach Anspruch 9, **dadurch gekennzeichnet, daß** eine der Lagerkomponenten als Keramikstift (56) ausgebildet ist.

11. Offenend-Spinnvorrichtung nach Anspruch 10, **dadurch gekennzeichnet, daß** der Keramikstift (56) in einer Bohrung der Lagerbuchse (28) des Axiallagers (18) festgelegt ist.

12. Offenend-Spinnvorrichtung nach Anspruch 10, **dadurch gekennzeichnet, daß** der Keramikstift (56) in einer Bohrung des Rotorschaftes (4) festgelegt ist.

## Claims

1. Open end spinning device with a spinning rotor (3), which is supported with its rotor shaft (4), free of axial thrust, in the bearing interspace of a supporting ring bearing arrangement (5) and is fixed by a magnetic axial bearing (18), the axial bearing (18) having a stationary magnetic bearing component (27), which can be fixed to the bearing housing (26), and a peripheral magnetic bearing component (27) arranged on the rotor shaft end side and formed by at least two ferromagnetic annular shoulders (46), and the annular shoulders (46) being formed by recesses (47) in the rotor shaft (4), **characterised in that** the annular shoulders (46) are blunted in each case in the region between their outer periphery (58) and their adjacent side faces (50) and **in that** the bases (49) of the recesses (47) are connected, in each case, via radii (51) to the side faces (50) of the adjacent annular shoulders (46).

2. Open end spinning device according to claim 1, **characterised in that** the ratio of the rotor shaft length (L) to the rotor shaft diameter (D) is < 12/1, preferably 11.33/1.

3. Open end spinning device according to claim 1, **characterised in that** the rotor shaft (4) has a length (L) of < 100 mm, preferably a length of 93.5 mm.

4. Open end spinning device according to any one of the preceding claims, **characterised in that** the annular shoulders (46) in the region between their outer periphery (58) and the adjacent side faces (50), in each case have a radius (48).

5. Open end spinning device according to claim 4, **characterised in that** the radii (48) in the region of the outer periphery (58) are, in each case, between 0.1 and 0.5 mm, preferably 0.3 mm.

6. Open end spinning device according to any one of the preceding claims, **characterised in that** the annular shoulders (46) in the region between their outer periphery (58) and the adjacent side faces (50), in each case, have a chamfer (43).

7. Open end spinning device according to any one of the preceding claims, **characterised in that** the radii (51) between the bases (49) of the recesses (47) and the side faces (50) of the annular shoulders (46) are between 0.2 and 1.5 mm, preferably 0.7 mm in size.

8. Open end spinning device according to any one of the preceding claims, **characterised in that** the end face (50') of the last annular shoulder (46) is the rear end of the rotor shaft (4).

9. Open end spinning device according to any one of the preceding claims, **characterised in that** a mechanical emergency running bearing (52) is provided in the region of the rotor shaft end, at least one bearing component of this emergency running bearing being made from a ceramic material.

10. Open end spinning device according to claim 9, **characterised in that** one of the bearing components is configured as a ceramic pin (56).

11. Open end spinning device according to claim 10, **characterised in that** the ceramic pin (56) is fixed in a hole of the bearing bush (28) of the axial bearing (18).

12. Open end spinning device according to claim 10, **characterised in that** the ceramic pin (56) is fixed in a hole of the rotor shaft (4).

## Revendications

1. Dispositif de filage à fibres libérées ou à bouts ouverts, comprenant un rotor de filage (3) qui prend appui avec sa tige (4) dans la zone de support d'un palier à disques d'appui (5) sans poussée axiale et qui est maintenu par un palier axial magnétique (18), le palier axial (18) présentant un élément de palier magnétique (27) stationnaire pouvant être fixé sur le boîtier de palier (26) et un élément de palier magnétique (27) rotatif disposé du côté de l'extrémité de la tige du rotor et formé par au moins deux saillies annulaires (46) ferromagnétiques, et les saillies annulaires (46) étant formées par des entailles (47) réalisées dans la tige (4) du rotor, **caractérisé en ce que** les saillies annulaires (46) sont adoucies dans la zone située entre leur pourtour extérieur (58) et leurs surfaces latérales (50) adjacentes, et **en ce que** les surfaces de base (49) des entailles (47) sont chacune reliées par le biais de rayons (51) aux surfaces latérales (50) des saillies annulaires (46) adjacentes.

2. Dispositif de filage à fibres libérées selon la revendication 1, **caractérisé en ce que** le rapport entre la longueur (L) de la tige du rotor et le diamètre (D) < 12/1, et est de préférence de 11,33/1.

3. Dispositif de filage à fibres libérées selon la revendication 1, **caractérisé en ce que** la tige (4) du rotor présente une longueur (L) < 100 mm, de préférence une longueur de 93,5 mm.

4. Dispositif de filage à fibres libérées selon l'une des revendications précédentes, **caractérisé en ce que** les saillies annulaires (46) présentent chacune un rayon (48) dans la zone située entre leur pourtour extérieur (58) et les surfaces latérales (50) adjacentes.

5. Dispositif de filage à fibres libérées selon la revendication 4, **caractérisé en ce que** dans la zone du pourtour extérieur (58), les rayons (48) sont compris entre 0,1 et 0,5 mm et s'élèvent de préférence à 0,3 mm.

6. Dispositif de filage à fibres libérées selon l'une des revendications précédentes, **caractérisé en ce que** les saillies annulaires (46) présentent chaque fois un chanfrein (43) dans la zone située entre leur pourtour extérieur (58) et les surfaces latérales (50) adjacentes.

7. Dispositif de filage à fibres libérées selon l'une des revendications précédentes, **caractérisé en ce que** les rayons (51) entre les surfaces de base (49) des entailles (47) et les surfaces latérales (50) des saillies annulaires (46) sont compris entre 0,2 et 1,5 mm et s'élèvent de préférence à 0,7 mm.

8. Dispositif de filage à fibres libérées selon l'une des revendications précédentes, **caractérisé en ce que** la face frontale (50') de la dernière saillie annulaire (46) constitue l'extrémité arrière de la tige (4) du rotor.

9. Dispositif de filage à fibres libérées selon l'une des revendications précédentes, **caractérisé en ce que** dans la zone de l'extrémité de la tige du rotor, un palier de secours mécanique (52) est prévu, au moins un élément dudit palier de secours étant fabriqué en un matériau céramique.

10. Dispositif de filage à fibres libérées selon la revendication 9, **caractérisé en ce que** l'un des éléments du palier est réalisé en tant que broche en céramique (56).

11. Dispositif de filage à fibres libérées selon la revendication 10, **caractérisé en ce que** la broche en céramique (56) est immobilisée dans un perçage du coussinet (28) du palier axial (18).

12. Dispositif de filage à fibres libérées selon la revendication 10, **caractérisé en ce que** la broche en céramique (56) est immobilisée dans un perçage de la tige (4) du rotor.
